# EUROPEAN PATENT SPECIFICATION

(11) **EP 3 581 421 B1**
(45) Date of publication and mention of the grant of the patent: **03.03.2021**
(21) Application number: 19178189.7
(22) Date of filing: 04.06.2019
(51) Int. Cl.: B60K 17/10, B60K 17/356

(54) **TRACTOR WITH BYPASS GROUP FOR STATIONARY STEERING**
TRAKTOR MIT BYPASS-GRUPPE FÜR STATIONÄRE LENKUNG
TRACTEUR AVEC GROUPE DE DÉRIVATION POUR DIRECTION STATIONNAIRE

(30) Priority: 15.06.2018 IT 201800006376
(43) Date of publication of application: 18.12.2019
(73) Proprietor: Stiga S.p.A. in breve anche St. S.p.A., 31033 Castelfranco Veneto (TV) (IT)
(72) Inventor: BROVEDANI, Vittorio, 31025 Santa Lucia de Piave (TV) (IT); BACCEGA, Federico, 35010 Santa Giustina in Colle (PD) (IT); ZANON, Alexander, 31023 Resana (TV) (IT); SUSIN, Eddi, 31050 Vedelago (TV) (IT)
(74) Representative: Mittler, Andrea

(56) References cited:
- US-A- 4 947 956
- US-A- 6 035 909
- US-A1- 2005 178 599

## Description

The present invention relates to a tractor with a bypass group for stationary steering.

It is known to use tractors of limited sizes, associated alternatively with cutting means, spraying means, means for removing snow or ice, brushes for leaves, shredding means and more.

The tractor allows covering very large areas with a significant flexibility of use.

Four-wheel drive tractors formed by a front frame and a rear frame hinged to each other in a fulcrum, are commonly used.

The rotation axis of the front frame with respect to the rear frame is at said fulcrum, at a distance X₁ from the front axle of the front wheels, which is different from distance X₂ of the rotation axis from the rear axle of the rear wheels.

The front wheels are driven by a front engine supplied by a hydraulic pump which also supplies a rear engine which drives the rear wheels.

Said front and rear engines are hydraulically supplied in series in both directions by said pump.

The steering occurs due to a mechanical transmission (for example, a chain transmission that runs under the tractor) which connects the steering wheel to the rear frame, thus inducing the rotation thereof about the fulcrum.

The pump idles when the tractor is stationary: the oil flow in the hydraulic circuit is substantially null.

Disadvantageously, if steering is performed when the tractor is stationary, the engines operate as pump, generating a contrary oil flow therebetween: the steering is blocked at a given point. This occurs due to the above-described double frame construction solution.

The prior art proposes technical solutions of electronic type for assisting with the steering: see e.g. US-8909428, CN-205826206 and KR-10-1549303 B1.

However, none of said documents deals with the problem of the steering with the tractor stationary, in which there are four driving wheels with two frames hinged between the axles of the front and rear wheels, as described above.

In particular, none of them looks for a hydraulic solution that does not complicate the electronics of the tractor.

A hydraulic four-wheel driving articulated vehicle is known from US 2005/178599 A1

It is the object of the present invention to make a tractor with a hydraulic circuit that helps the steering when the tractor is stationary, in particular for a four-wheel drive tractor with two frames hinged between the axles of the front and rear wheels.

It is a further object of the present invention that said hydraulic circuit is simple to make, in particular involving slight modifications to the hydraulic circuits currently used on double frame tractors.

It is a still further object of the present invention that the use of said new hydraulic circuit does not result in a substantial modification of the control electronics of the hydraulic circuit itself, and of the tractor in general.

According to the invention, these and further objects are achieved with a tractor comprising a front frame and a rear frame rotatably associated in a fulcrum, the front frame supports a front engine for driving front wheels, while the rear frame supports a rear engine for driving rear wheels, said tractor further comprises a pump in hydraulic communication with the front engine and the rear engine, and comprises a bypass group in hydraulic communication with the pump and with the front engine and the rear engine, the bypass group comprises, in series on a first hydraulic line of a hydraulic circuit, a non-return valve which allows the passage of fluid only in a first direction and a switchable valve able to switch between a first position in which fluid passage is allowed only in a second direction opposite to said first direction, and a second position in which fluid passage is allowed both in the first and in the second direction.

Advantageously, the bypass group allows steering the tractor also when it is stationary, i.e. when the pump is idling, with a simple variation of the hydraulic circuit.

The bypass group comprises commonly used valves, does not make the tractor heavier, and remains substantially neutral when the engines are put into rotation, without modifying the performance of the engines themselves in any manner.

The switchable valve is flexible in use: the threshold switching value is easily settable according to usage needs.

A tractor advantageously may be made with the traditional hinged double frame scheme, thus ensuring the steering also when the tractor is stationary.

These and other features of the present invention will become more apparent from the following detailed description of a practical embodiment thereof, shown by way of non-limiting example in the accompanying drawings, in which:
figure 1 shows a side view of a tractor;
figure 2 shows a diagrammatic top plan view of the tractor;
figure 3 shows a hydraulic circuit diagram, in a first operating configuration;
figure 4 shows the hydraulic circuit diagram, in a second operating configuration;
figure 5 shows the hydraulic circuit diagram, in a third operating configuration.

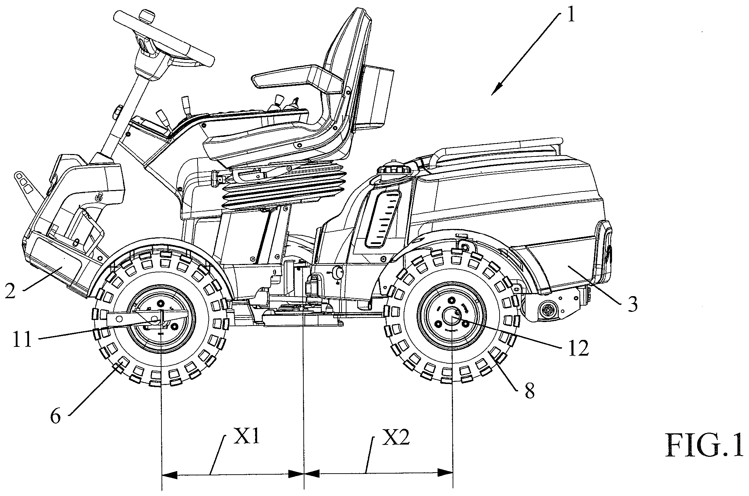

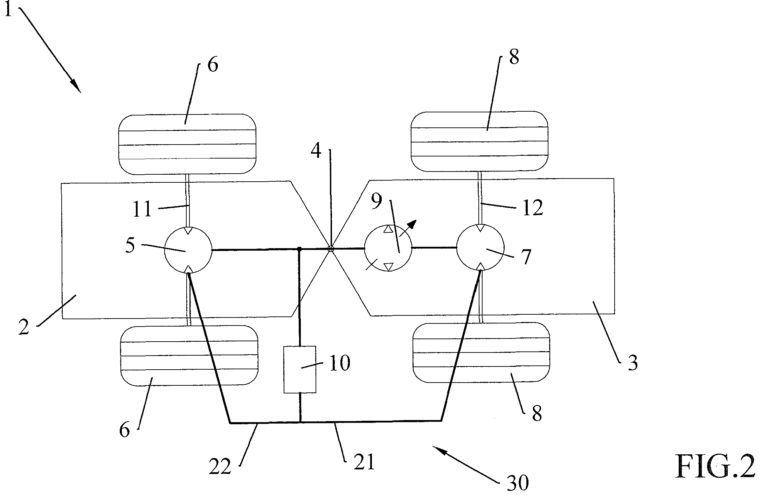

A tractor 1 comprises a front frame 2 and a rear frame 3 rotatably associated in a fulcrum 4 (figures 1 and 2).

The front frame 2 supports a front engine 5 for driving front wheels 6, while the rear frame 3 supports a rear engine 7 for driving rear wheels 8.

The tractor 1 further comprises a pump 9 and a bypass group 10 (figures 2 to 5).

The distance between the fulcrum 4 and a front axle 11 of the front wheels 6 is X₁, while the distance between the fulcrum 4 and a rear axle 12 of the rear wheels 8 is X₂ (figure 1).

In the present embodiment, X₁ is less than X₂; the difference between X₁ and X₂ preferably is less than 5%, preferably it is equal to 2%.

Alternatively, X₁ could be greater than or equal to X₂.

Experimental tests have shown that the steering problems occur especially when X₁ differs from X₂, the technical solution herein claimed being optimal for the above-mentioned differences between X₁ and X₂.

In a hydraulic circuit 30 of the tractor 1, the bypass group 10 comprises, in series on a same hydraulic line 15, a non-return valve 13 which allows the passage of fluid (oil) only in a first direction and a switchable valve 14 able to switch between a position P₁ in which fluid passage is allowed only in a second direction opposite to said first direction, and a position P₂ in which fluid passage is allowed both in the first and in the second direction.

The hydraulic line 15 converges in a node 16 in which a hydraulic line 17 converging from pump 9 and a hydraulic line 18 connecting to the front engine 5, also converge.

The pump 9 is connected to the rear engine 7 via a hydraulic line 19.

The hydraulic line 15 connects the node 16 with a node 20 which hydraulically connects, via hydraulic lines 21, 22, also the rear engine 7 with the front engine 5, respectively.

The front engine 5 and the rear engine 7 therefore are in hydraulic communication via the pump 9, the bypass group 10 and the hydraulic lines 21, 22 (figures 2 to 5).

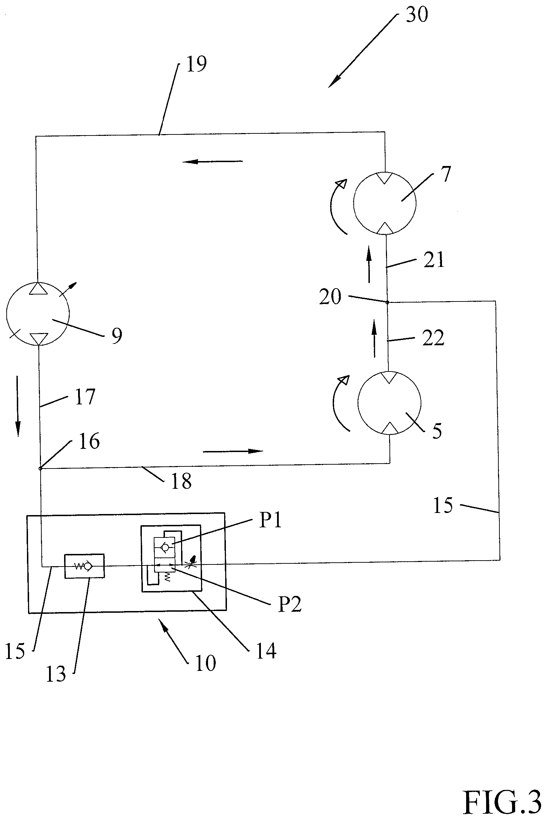

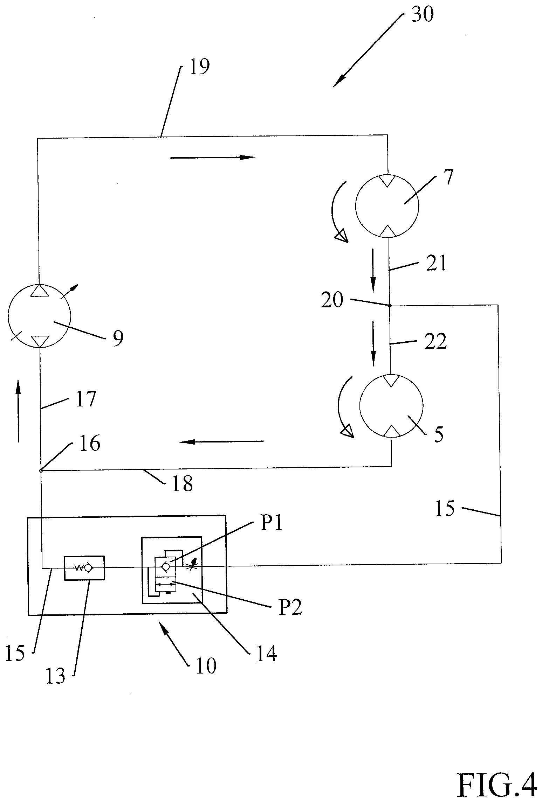

Operatively, the pump 9 may pump oil both towards the front engine 5 (figure 3) and towards the rear engine 7 (figure 4).

The tractor 1 is moving in the configurations of the hydraulic circuit 30 in figures 3 and 4.

In figure 3, the oil flows through the hydraulic line 17 and then the hydraulic line 18, without crossing the bypass group 10 for the blocking activity of the non-return valve 13.

The oil puts into rotation the front engine 5 and then the rear engine 7 in series with each other.

The hydraulic circuit 30 closes due to the hydraulic line 19 that bring the oil back to the pump 9.

If the flowing direction of the oil is opposite (figure 4), the oil reaches the front engine 5 after operating the rear engine 7.

Oil does not flow through the bypass group 10 because the switchable valve 14 is in position P₁.

The operating oil flow may vary between 0 and 35 l/min (liters per minute), with maximum nominal flow rates between 25 and 35 1/min (liters per minute), preferably of 30 l/min.

In the configuration of figure 4, oil does not flow through the bypass group 10 because the switchable valve 14 has an action threshold value which is less than the maximum flow rate of the pump. Said action threshold is regulated between 2 and 12 l/min, preferably is 5 l/min.

The steering does not pose any problem in the configurations of figures 3 and 4, i.e. with the tractor 1 moving, because the engines 5, 7 operate properly.

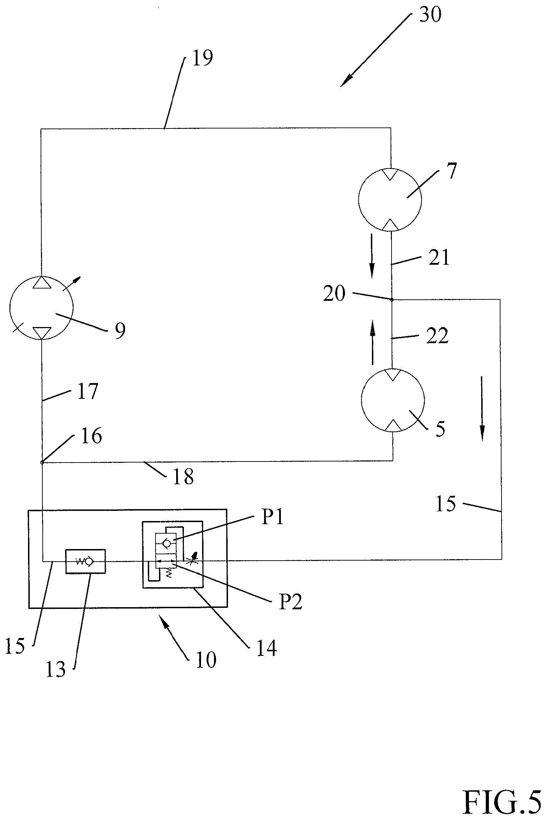

The pump 9 is idling in the configuration of figure 5, i.e. the one in which the tractor is stationary.

If steering is started (the steering wheel is turned), the front engine 5 and the rear engine 7 pump oil towards the node 20 because the rotation of the steering wheel induces the rotation about fulcrum 4 of the rear frame 3 with respect to the front frame 2: the force applied by the operator on the steering wheel induces the front engine 5 and the rear engine 7 to operate as pumps.

The oil flow induced by the steering is very low, in the order of one l/min.

Accordingly, the switchable valve 14 switches into position P₂ because the threshold value is greater than the flow rate flowing through the hydraulic line 15: the bypass group 10 then allows the flowing of the oil, thus allowing the steering.

Without the bypass group 10, the opposite oil flow between the two engines 5, 7 would cause the blocking of the steering because the engines 5, 7 become antagonists to each other.

Advantageously, the bypass group 10 allows steering tractor 1 also when it is stationary, i.e. when the pump 9 is idling, with a simple variation of the hydraulic circuit 30.

The bypass group 10 comprises commonly used valves 13, 14, does not make the tractor heavier and remains substantially neutral when the engines are put into rotation without modifying the performance of the engines themselves in any manner.

The switchable valve 14 is flexible in use: the switching threshold value is easily settable according to usage needs.

A tractor 1 advantageously may be made with the traditional hinged double frame scheme, thus ensuring the steering also when the tractor is stationary.

Cutting means, spraying means, means for removing snow or ice, brushes for leaves, shredding means and more again, may alternatively be associated with the tractor.

The tractor allows covering very large grounds with a significant flexibility of use.

## Claims

1. Tractor (1) comprising a front frame (2) and a rear frame (3) rotatably associated in a fulcrum (4), the front frame (2) supports a front engine (5) for driving front wheels (6), while the rear frame (3) supports a rear engine (7) for driving rear wheels (8),
said tractor (1) further comprises a pump (9) in hydraulic communication with the front engine (5) and the rear engine (7),
and comprises a bypass group (10) in hydraulic communication with the pump (9) and with the front engine (5) and the rear engine (7),
the bypass group (10) comprises, in series on a first hydraulic line (15) of a hydraulic circuit (30), a non-return valve (13) which allows the passage of fluid only in a first direction, and a switchable valve (14) able to switch between a first position (P1) in which fluid passage is allowed only in a second direction opposite to said first direction, and a second position (P2) in which fluid passage is allowed both in the first and in the second direction.

2. Tractor (1) according to claim 1, **characterized in that** in said hydraulic circuit (30), the first hydraulic line (15) converges into a first node (16) in which also converge a second hydraulic line (17) converging from the pump (9), and a third hydraulic line (18) that connects to the front engine (5),
the pump (9) is connected to the rear engine (7) via a fourth hydraulic line (19),
the first hydraulic line (15) connects the first node (16) with a second node (20) which hydraulically connects, via a fifth (21) and a sixth hydraulic line (22), also the rear engine (7) with the front engine (5) respectively.

3. Tractor (1) according to claim 1 or 2, **characterized in that** the switchable valve (14) is able to switch on reaching an oil flow threshold value.

4. Tractor (1) according to claim 3, **characterized in that** the threshold value is lower than the maximum nominal oil flow rate.

5. Tractor (1) according to claim 4, **characterized in that** the threshold value is between 2 and 12 l/min, preferably it is equal to 5 l/min.

6. Tractor (1) according to any one of the previous claims, **characterized in that** said fulcrum (4) is at a first distance (X₁) from a front axle (11) of the front wheels (6), and at a second distance (X₂) from a rear axle (12) of the rear wheels (8), the difference between the first distance (X₁) and the second distance (X₂) is less than 5%, preferably equal to 2%.

## Patentansprüche

1. Traktor (1), mit einem vorderen Rahmen (2) und einem hinteren Rahmen (3), die an einem Drehpunkt (4) drehbar verbunden sind, wobei der vordere Rahmen (2) einen vorderen Motor (5) zum Antreiben von Vorderrädern (6) trägt, während der hintere Rahmen (3) einen hinteren Motor (7) zum Antreiben von Hinterrädern (8) trägt,
wobei der Traktor (1) ferner eine Pumpe (9) in hydraulischer Verbindung mit dem vorderen Motor (5) und dem hinteren Motor (7) aufweist sowie ferner eine Bypass-Gruppe (10) in hydraulischer Verbindung mit der Pumpe (9) sowie mit dem vorderen Motor (5) und dem hinteren Motor (7) aufweist,
wobei die Bypass-Gruppe (10) auf einer ersten Hydraulikleitung (15) eines Hydraulikkreises (30) in Reihe ein Rückschlagventil (13), das die Passage von Fluid nur in einer ersten Richtung ermöglicht, sowie ein umschaltbares Ventil (14) aufweist, das in der Lage ist, zwischen einer ersten Position (P1), in der die Passage von Fluid nur in einer zweiten Richtung entgegengesetzt zu der ersten Richtung ermöglicht ist, und einer zweiten Position (P2) umzuschalten, in der die Passage von Fluid sowohl in der ersten als auch in der zweiten Richtung ermöglicht ist.

2. Traktor (1) nach Anspruch 1,
**dadurch gekennzeichnet, dass** in dem Hydraulikkreis (30) die erste Hydraulikleitung (15) in einem ersten Knoten (16) konvergiert, in dem auch eine zweite Hydraulikleitung (17), die von der Pumpe konvergiert (9), und eine dritte Hydraulikleitung (18) konvergieren, die mit dem vorderen Motor (5) verbunden ist,
dass die Pumpe (9) über eine vierte Hydraulikleitung (19) mit dem hinteren Motor (7) verbunden ist,
dass die erste Hydraulikleitung (15) den ersten Knoten (16) mit einem zweiten Knoten (20) verbindet, der über eine fünfte (21) und eine sechste Hydraulikleitung (22) auch den hinteren Motor (7) mit dem vorderen Motor (5) hydraulisch verbindet.

3. Traktor (1) nach Anspruch 1 oder 2,
**dadurch gekennzeichnet, dass** das umschaltbare Ventil (14) beim Erreichen eines Ölfluss-Schwellenwertes einschalten kann.

4. Traktor (1) nach Anspruch 3,
**dadurch gekennzeichnet, dass** der Schwellenwert niedriger ist als die maximale nominale Ölströmungsrate.

5. Traktor (1) nach Anspruch 4,
**dadurch gekennzeichnet, dass** der Schwellenwert zwischen 2 und 12 l/min liegt und vorzugsweise gleich 5 l/min beträgt.

6. Traktor (1) nach einem der vorhergehenden Ansprüche,
**dadurch gekennzeichnet, dass** sich der Drehpunkt (4) in einem ersten Abstand (X₁) von einer Vorderachse (11) der Vorderräder (6) und in einem zweiten Abstand (X₂) von einer Hinterachse (12) der Hinterräder (8) befindet und dass die Differenz zwischen dem ersten Abstand (X₁) und dem zweiten Abstand (X₂) weniger als 5% ist und vorzugsweise gleich 2% beträgt.

## Revendications

1. Tracteur (1) comprenant un cadre avant (2) et un cadre arrière (3) associés en pouvant tourner dans un point d'appui (4), le cadre avant (2) supporte un moteur avant (5) pour propulser des roues avant (6), alors que le cadre arrière (3) supporte un moteur arrière (7) pour propulser des roues arrière (8),
ledit tracteur (1) comprend de plus une pompe (9) en communication hydraulique avec le moteur avant (5) et le moteur arrière (7), et comprend
un groupe de contournement (10) en communication hydraulique avec la pompe (9) et avec le moteur avant (5) et le moteur arrière (7),
le groupe de contournement (10) comprend, en série sur une première ligne hydraulique (15) d'un circuit hydraulique (30), un clapet anti-retour (13) qui permet le passage de fluide uniquement dans une première direction, et une vanne commutable (14) apte à commuter entre une première position (P1) dans laquelle le passage de fluide est permis uniquement dans une seconde direction opposée à ladite première direction, et une seconde position (P2) dans laquelle le passage de fluide est permis à la fois dans la première et dans la seconde direction.

2. Tracteur (1) selon la revendication 1, **caractérisé en ce que** dans ledit circuit hydraulique (30), la première ligne hydraulique (15) converge dans un premier nœud (16) dans lequel converge également une seconde ligne hydraulique (17) convergeant à partir de la pompe (9), et une troisième ligne hydraulique (18) qui se connecte au moteur avant (5),
la pompe (9) est connectée au moteur arrière (7) via une quatrième ligne hydraulique (19),
la première ligne hydraulique (15) connecte le premier nœud (16) avec un second nœud (20) qui connecte hydrauliquement, via une cinquième (21) et une sixième ligne hydraulique (22), également le moteur arrière (7) avec le moteur avant (5) respectivement.

3. Tracteur (1) selon la revendication 1 ou 2, **caractérisé en ce que** la vanne commutable (14) est apte à commuter en atteignant une valeur de seuil d'écoulement d'huile.

4. Tracteur (1) selon la revendication 3, **caractérisé en ce que** la valeur de seuil est inférieure au débit d'huile nominal maximal.

5. Tracteur (1) selon la revendication 4, **caractérisé en ce que** la valeur de seuil est de 2 à 12 l/min, est de préférence égale à 5 l/min.

6. Tracteur (1) selon l'une quelconque des revendications précédentes, **caractérisé en ce que** ledit point d'appui (4) se trouve à une première distance (X₁) d'un axe avant (11) des roues avant (6), et à une seconde distance (X₂) d'un axe arrière (12) des roues arrière (8), la différence entre la première distance (X₁) et la seconde distance (X₂) est inférieure à 5 %, de préférence égale à 2 %.
